# FASCICULE DE BREVET EUROPEEN

(11) **EP 2 161 650 B1**
(45) Date de publication et mention de la délivrance du brevet: **19.04.2017**
(21) Numéro de dépôt: 09290644.5
(22) Date de dépôt: 26.08.2009
(51) Int. Cl.: G06F 3/023, G06F 3/048, G01C 23/00

(54) **Procédé de configuraniton automatique de touches de commande et dispositif de controle de moyens d'affichage, notamment pour aéronef**
Automatisches Konfigurationsverfahren von Steuertasten und Kontrollvorrichtung der Anzeigemittel, insbesondere für Luftfahrzeuge
Method for automatic configuration of control keys and device for controlling display means, in particular for an aircraft

(30) Priorité: 03.09.2008 FR 0855916
(43) Date de publication de la demande: 10.03.2010
(73) Titulaire: AIRBUS OPERATIONS, 31060 Toulouse (FR)
(72) Inventeur: Detouillon, Grégory, 31200 Toulouse (FR)
(74) Mandataire: Santarelli

(56) Documents cités:
- US-A- 6 072 473
- US-B1- 7 301 532

## Description

La présente invention concerne un procédé de configuration automatique de touches de commande d'un dispositif de contrôle de moyens d'affichage.

Elle concerne également un dispositif de contrôle de moyens d'affichage adapté à mettre en oeuvre le procédé de configuration automatique.

Elle vise également un poste de pilotage et un aéronef comprenant un tel poste de pilotage adapté à utiliser un dispositif de contrôle de moyens d'affichage.

De manière générale, la présente invention concerne un poste de pilotage d'un aéronef (également appelé en terminologie anglo-saxonne "*cockpit*"), et plus particulièrement les moyens d'affichage permettant de présenter les informations nécessaires aux pilotes.

L'affichage des informations nécessaires à la conduite du vol des aéronefs a beaucoup évolué depuis l'apparition des premiers instruments de vol.

En particulier, l'introduction progressive de systèmes d'informations de vol électroniques EFIS (acronyme du terme anglo-saxon *"Electronic Flight Informations System*"), utilisant des écrans d'affichage, a apporté une grande souplesse d'affichage au niveau des informations.

Le document US 6,072,473 divulgue un tel système. Il est possible en particulier d'adapter les informations affichées en fonction des besoins des pilotes, et notamment de rendre non permanente certaines informations utilisées ponctuellement.

Cette évolution est en outre accompagnée d'un besoin toujours croissant en volume d'informations, pour s'adapter aux évolutions de l'environnement aéronautique.

En règle générale, les informations les plus critiques pour la conduite de vol sont affichées de manière permanente sur certains écrans, des informations moins critiques pouvant être affichées à la demande sur d'autres écrans.

Ces informations sont regroupées de manière cohérente au sein de différents formats ou interfaces affichables sur chaque écran.

Compte tenu toutefois du volume d'informations, toujours croissant, il est parfois impossible de conserver quelques écrans dédiés à des affichages critiques.

La perte de l'affichage permanent des informations critiques et la multiplication des formats accessibles sur chaque écran des moyens d'affichage d'un poste de pilotage ne peuvent être acceptables que si le format désiré et les informations recherchées peuvent être retrouvés facilement et rapidement par les pilotes.

La présente invention a pour but de proposer un procédé de configuration automatique et un dispositif de contrôle de moyens d'affichage permettant de gérer les affichages de chaque écran de manière efficace, tant au niveau de son accessibilité physique par les pilotes que par sa simplicité d'utilisation.

A cet effet, la présente invention vise, selon un premier aspect, un procédé de configuration automatique de touches de commande d'un dispositif de contrôle de moyens d'affichage comportant plusieurs écrans, chaque écran étant adapté à afficher un ou plusieurs formats.

Le procédé de configuration comprend les étapes suivantes :
- sélection d'un écran parmi les écrans des moyens d'affichage ;
- détermination d'un ensemble de formats affichables et d'un format courant affiché sur l'écran sélectionné ;
- mise à jour de moyens de visualisation associés respectivement aux touches de commande afin de différencier ledit format courant affiché ;
- attribution aux touches de commande du dispositif de contrôle de fonctions adaptées à commander l'affichage respectivement de formats affichables sur l'écran sélectionné; et
- mise à jour de moyens de visualisation en vue d'identifier visuellement les formats attribués respectivement aux touches de commande.

Ainsi, pour chaque écran sélectionné des moyens d'affichage, le dispositif de contrôle est configuré automatiquement en fonction des formats accessibles sur cet écran.

Le rôle des touches et leur aspect visuel sont ainsi modifiés et configurés automatiquement pour permettre aux pilotes d'accéder rapidement aux formats disponibles, par actionnement d'une des touches de commande.

Selon une caractéristique avantageuse de l'invention, la sélection d'un écran est mise en oeuvre à partir de la position d'un curseur associé aux moyens d'affichage.

Ainsi, lorsqu'un curseur permet d'interagir avec les éléments affichés sur les écrans des moyens d'affichage, la sélection d'un écran est réalisée automatiquement par le positionnement du curseur, la configuration des touches de commande du dispositif de contrôle étant alors modifiée automatiquement dès que le curseur sélectionne un écran différent, parmi les écrans des moyens d'affichage.

Alternativement, la sélection d'un écran est mise en oeuvre à partir d'une touche de commande du dispositif de contrôle des moyens d'affichage.

Il est ainsi possible de sélectionner un écran des moyens d'affichage, de manière indépendante de l'existence ou non d'un curseur associé aux moyens d'affichage.

Le même dispositif de contrôle des moyens d'affichage permet ainsi à la fois de sélectionner un écran, puis un des formats affichables sur cet écran.

La présente invention concerne également, selon un second aspect, un dispositif de contrôle de moyens d'affichage comprenant plusieurs écrans adaptés à afficher plusieurs formats.

Le dispositif de contrôle comprend plusieurs touches de commande et des moyens de configuration automatique d'une fonction de commande d'affichage d'un format et de moyens de visualisation associés aux touches de commande, adaptés à différencier le format courant affiché sur un écran et à attribuer respectivement aux touches de commande des formats affichables sur un écran.

Ce dispositif de contrôle présente des caractéristiques et avantages analogues à ceux décrits précédemment en référence au procédé de configuration automatique de touches de commande selon l'invention.

De préférence, le nombre de touches de commande est au moins égal à un nombre de formats affichables sur un écran des moyens d'affichage.

Ainsi, l'ensemble des touches de commande du dispositif de contrôle permet de proposer simultanément à un pilote l'ensemble des formats affichables sur l'écran des moyens d'affichage.

Alternativement, le nombre de touches de commande est inférieur à un nombre de formats affichables sur un écran des moyens d'affichage, les moyens de configuration automatiques étant adaptés à attribuer à des touches de commande au moins deux formats affichables sur un écran selon des configurations alternées, une des touches de commande étant adaptée à alterner la configuration des autres touches de commande, et le nombre des formats attribués aux autres touches de commande étant au moins égal au nombre de formats affichables sur l'écran des moyens d'affichage.

Grâce à une touche du dispositif de contrôle permettant de naviguer entre les différentes configurations des autres touches, il est possible d'accéder de manière relativement simple à l'ensemble des formats affichables sur un écran même si le nombre de touches de commande disponibles sur le dispositif de contrôle est inférieur au nombre de formats affichables sur cet écran.

Par ailleurs, le dispositif de contrôle comprend en outre des moyens de configuration automatique d'une fonction de sélection d'un écran et de moyens de visualisation associés aux touches de commande, adaptés à associer respectivement aux touches de commande des écrans des moyens d'affichage.

Le même dispositif de contrôle permet ainsi de sélectionner un écran des moyens d'affichage, permettant comme indiqué précédemment de s'affranchir d'une sélection par un curseur associé aux moyens d'affichage.

Finalement, la présente invention concerne également un poste de pilotage d'un aéronef comprenant des moyens d'affichage comportant plusieurs écrans adaptés à afficher un ou plusieurs formats, comportant un dispositif de contrôle des moyens d'affichage conforme à l'invention.

Elle concerne également un aéronef comprenant un tel poste de pilotage.

Ce poste de pilotage et l'aéronef comprenant un tel poste de pilotage présentent des caractéristiques et avantages analogues à ceux décrits précédemment en relation avec le procédé de configuration automatique et le dispositif de contrôle de moyens d'affichage conforme à l'invention.

D'autres particularités et avantages de l'invention apparaîtront encore dans la description ci-après.

Aux dessins annexés, donnés à titre d'exemples non limitatifs :
- la figure 1 est une vue illustrant schématiquement des moyens d'affichage d'un poste de pilotage d'un aéronef ;
- les figures 2A, 2B et 2C illustrent différents types de configuration d'un dispositif de contrôle conforme à un premier mode de réalisation de l'invention ;
- la figure 3 illustre des configurations alternées du dispositif de contrôle de la figure 2A ;
- la figure 4 illustre une configuration d'un dispositif de contrôle conforme à un second mode de réalisation de l'invention ;
- la figure 5 illustre des configurations différentes du dispositif de contrôle de la figure 4 ;
- la figure 6 est schéma bloc illustrant un dispositif de contrôle adapté à mettre en oeuvre le procédé de configuration automatique selon le premier mode de réalisation de l'invention ; et
- la figure 7 est schéma bloc illustrant un dispositif de contrôle adapté à mettre en oeuvre un procédé de configuration automatique selon le second mode de réalisation de l'invention.

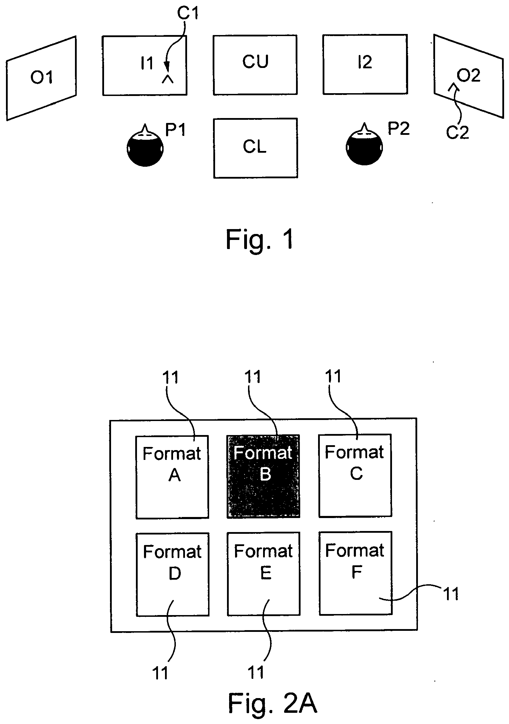

On va décrire tout d'abord en référence à la figure 1 un poste de pilotage d'un aéronef adapté à mettre en oeuvre la présente invention.

De manière classique, un poste de pilotage d'un aéronef comporte des moyens d'affichage d'informations à destination de pilotes P1, P2, traditionnellement dénommés pilote P1 et copilote P2.

Ces moyens d'affichage comportent plusieurs écrans, chaque écran étant adapté à afficher un ou plusieurs formats regroupant des informations nécessaires pour la conduite du vol de l'aéronef.

Dans le mode de réalisation illustré schématiquement à la figure 1, le nombre d'écrans du poste de pilotage est égal, de manière nullement limitative, à six.

Ces écrans peuvent évidemment avoir des tailles différentes et permettent d'afficher un format plein écran ou encore deux demi-formats simultanément.

Ici, deux écrans O1, I1 sont accessibles à un premier pilote P1, deux autres écrans O2, 12 sont accessibles au second pilote P2, et deux écrans centraux CU, CL sont accessibles aux deux pilotes P1, P2.

Dans un premier mode de réalisation de l'invention, dans lequel un curseur permet de naviguer dans les différents écrans des moyens d'affichage du poste de pilotage et d'interagir avec des éléments affichés, chaque pilote P1, P2 se voit attribuer un curseur C1, C2 ainsi qu'un moyen pour contrôler sa position, et par exemple une souris ou un pavé tactile.

Les moyens de contrôle de la position de chaque curseur sont adaptés à ne permettre le déplacement de chaque curseur que sur les écrans attribués aux pilotes utilisant ces moyens de contrôle.

Ainsi, le curseur C1 du pilote P1 peut être déplacé sur les écrans O1, I1, CU et CL, alors que le curseur C2 du pilote P2 peut être déplacé sur les écrans O2, I2, CU, CL à la figure 1.

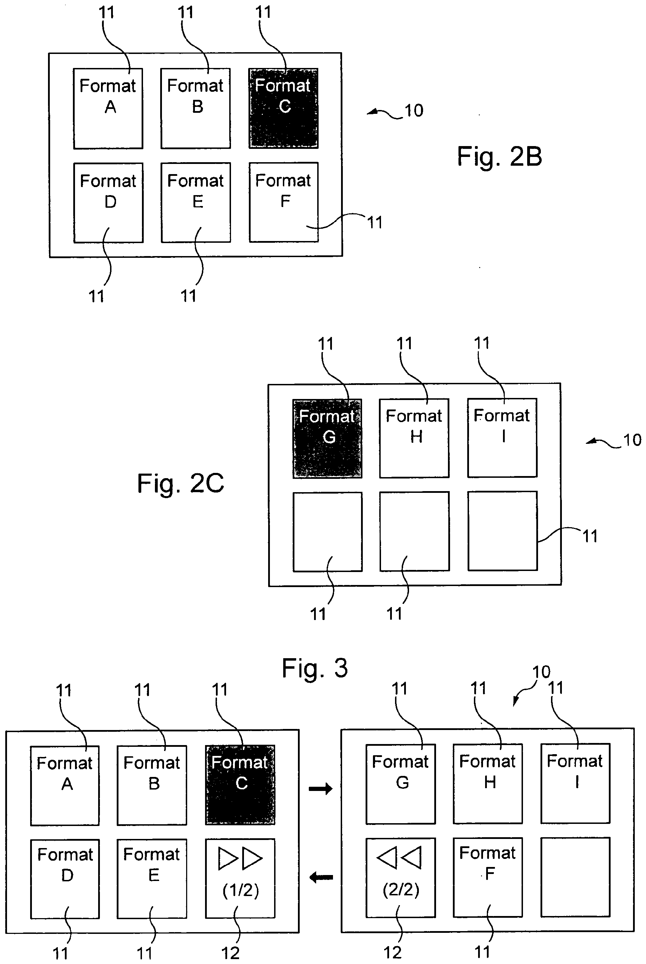

On a illustré sur les figures 2A à 2C un exemple de réalisation d'un dispositif de contrôle des moyens d'affichage conforme à un premier mode de réalisation de l'invention.

Ce dispositif de contrôle 10 comprend plusieurs touches de commande 11, chaque touche 11 étant associée à des moyens de visualisation permettant de visualiser la fonction de chaque touche de commande 11.

En pratique, chaque touche de commande 11 comporte un petit pictogramme permettant de matérialiser le rôle de cette touche de commande 11.

Comme décrit ultérieurement, la fonction de chaque touche de commande 11 pouvant évoluer suivant le contexte d'utilisation, le pictogramme est adapté à être configuré et à changer pour s'adapter à la fonction attribuée à la touche de commande 11.

En pratique, ce pictogramme est présenté sur un petit dispositif d'affichage disposé au niveau de chaque touche de commande 11.

Le dispositif de contrôle 10 conforme à l'invention peut être mis en oeuvre selon différents types de technologie.

En particulier, ce dispositif de contrôle 10 peut comporter plusieurs touches de commande 11 disposant chacune d'un petit écran de technologie OLED (acronyme du terme anglais "*Organic Light-Emitting Diode*"), directement inclus dans une touche de commande en saillie du dispositif de contrôle 10.

Ce type de technologie OLED est bien connu et n'a pas besoin d'être décrit en détail ici.

Alternativement, les touches de commande peuvent être constituées de touches virtuelles d'un écran tactile, chaque touche étant visualisée par un écran d'affichage permettant l'affichage d'une signalétique dépendant de la fonction de la touche de commande.

L'utilisation d'une technologie de touches virtuelles sur un écran tactile permet une grande évolutivité du dispositif de contrôle, ainsi que son application à n'importe quel poste de pilotage, quels que soient la disposition des écrans ou le nombre de formats affichables.

Par ailleurs, cet écran tactile peut de manière préférentielle être pourvu d'une technologie de retour sensitif lors de l'appui sur chaque touche virtuelle, permettant d'améliorer l'ergonomie lors du contrôle des moyens d'affichage par les pilotes.

Comme bien illustré sur la figure 2A, à chaque touche de commande 11 est associée une fonction de commande d'affichage d'un format, les moyens de visualisation de chaque touche de commande 11 permettant de visualiser le nom du format associé à chaque touche de commande 11.

Selon l'invention, dès lors qu'un écran est sélectionné, ici par la position d'un des curseurs C1, C2, le dispositif de contrôle comporte des moyens de configuration automatiques permettant d'attribuer à chaque touche de commande 11 un format affichable sur l'écran sélectionné.

Ainsi, l'affichage au niveau des moyens de visualisation et la fonction des touches de commande 11 du dispositif de contrôle 10 sont dépendants de l'écran sur lequel se trouve le curseur du pilote concerné.

Bien entendu, chaque pilote P1, P2 a à sa disposition un dispositif de contrôle différent, tel qu'illustré aux figures 2A à 2C, lui permettant de contrôler les écrans dont il a la gestion.

Dans ce premier mode de réalisation, le nombre de touches de commande 11 est au moins égal à un nombre de formats affichables sur un écran des moyens d'affichage.

On notera en particulier, que chaque écran des moyens d'affichage du cockpit est adapté éventuellement à afficher un nombre différent de formats.

Dans ce mode de réalisation, le nombre de touches de commande 11 du dispositif de contrôle 10 est dimensionné en fonction de l'écran présentant le plus grand nombre de formats ou combinaisons de formats affichables.

Ainsi, de manière nullement limitative, dans ce mode de réalisation on considère que les écrans O1, I1, CU, CL, I2, O2 des moyens d'affichage sont adaptés à afficher au plus six formats différents.

Le dispositif de contrôle 10 comporte ainsi six touches de commande 11 accessibles aux pilotes P1, P2.

A titre d'exemple, lorsque le curseur C1 du pilote P1 est positionné sur l'écran I1, cet écran I1 étant adapté à afficher six formats différents (formats A, B, C, D, E, F), le dispositif de contrôle 10 est configuré automatiquement pour permettre d'attribuer à chaque touche de commande 11 l'un des six formats A, B, C, D, E, F.

Grâce à l'association d'un pictogramme différencié à chaque touche de commande 11, le format attribué à chaque touche de commande 11 est facilement identifiable par le pilote.

Comme bien illustré à la figure 2A, le format courant affiché sur l'écran I1 (par exemple ici format B) est mis en évidence au niveau du dispositif de contrôle 10 grâce à un pictogramme différencié (par exemple par une couleur différente) au niveau de la touche de commande 11 à laquelle ce format B est attribué.

Bien entendu, la dénomination des formats peut être représentative du format en question.

Par exemple, le libellé "*Format A*" peut être remplacé par le libellé "*PFD*" (pour "*Primary Flight Display"*).

Dès lors que le pilote sélectionne un autre format à afficher sur l'écran I1 sur lequel est positionné le curseur C1, les moyens de visualisation associés à chaque touche de commande 11 du dispositif de contrôle 10 sont mis à jour afin de différencier le nouveau format affiché, ici le format C comme illustré à la figue 2B.

Par ailleurs, si le pilote P1 attribue le curseur C1 à un autre écran du poste de pilotage, et par exemple à l'écran CU, le dispositif de contrôle 10 est reconfiguré automatiquement, comme illustré à la figure 2C pour proposer aux pilotes les formats accessibles sur ce nouvel écran sélectionné CU.

Dans ce mode de réalisation, et de manière nullement limitative, on considère que le nouvel écran sélectionné CU peut afficher trois formats différents (formats G, H et I).

Comme illustré à la figure 2C, la fonction de commande d'affichage d'un format et les moyens de visualisation associés à chaque touche de commande 11 sont ainsi configurés automatiquement et mis à jour, le format courant affiché sur l'écran sélectionné CU (ici le format G) étant mis en évidence au niveau des pictogrammes affichés.

De préférence, afin de faciliter l'interface avec les moyens d'affichage, le dispositif de contrôle 10 permettant de sélectionner les formats affichés sur chaque écran, est disposé à proximité des moyens de commande du curseur permettant de sélectionner l'écran parmi les moyens d'affichage du poste de pilotage.

Ainsi, le pilote n'a que des mouvements très petits à effectuer pour sélectionner l'écran puis le format à afficher au travers d'une des touches de commande 11 du dispositif de contrôle 10.

On a illustré par ailleurs à la figure 3 une alternative au premier mode de réalisation de l'invention, dans laquelle le nombre de touches de commande 11 est inférieur au nombre de formats ou combinaisons de formats maximum affichables sur un des écrans du poste de pilotage.

Dans le mode de réalisation illustré à la figure 3, on considère qu'au moins un des écrans des moyens de visualisation du poste de pilotage est adapté à afficher plus de six formats différents, et par exemple dans ce mode de réalisation, neuf formats différents (formats A à I).

Les moyens de configuration automatique du dispositif de contrôle 10 sont alors adaptés à attribuer à des touches de commande 11 au moins deux formats différents affichables sur un écran, selon des configurations alternées de ces touches de commande 11.

Ainsi, à la figure 3, une des touches de commande 11 est de manière alternée adaptée à se voir attribuer soit le format A, soit le format G.

Une des touches de commande 12 est alors adaptée à alterner la configuration des autres touches. Cette touche de navigation 12 est dédiée à la navigation entre les différentes configurations des autres touches de commande 11 du dispositif de contrôle.

On notera que dans chaque configuration, le dispositif de contrôle 10 permet d'avoir accès à un nombre de formats réduit par rapport au nombre de formats accessible sur l'écran des moyens de visualisation.

En revanche, le nombre total de formats attribués aux touches de commande 11 est au moins égal au nombre de formats affichables sur cet écran des moyens d'affichage.

L'ensemble des configurations alternées des touches de commande 11 permet ainsi de couvrir l'ensemble des formats affichables sur l'écran.

On notera en particulier que si certains formats sont plus importants que d'autres, certaines touches de commande 11 peuvent être réservées lors de la configuration automatique à un unique format, quelle que soit l'alternance des configurations, les autres touches de commande 11 permettant de couvrir d'autres formats de moindre importance.

Ainsi, quelle que soit l'alternance de la configuration des touches de commande 11, les formats les plus importants peuvent rester accessibles de manière permanente aux pilotes.

Par ailleurs, bien que la touche de navigation 12 soit illustrée à la figure 3 pour permettre une alternance entre deux modes de configuration, le nombre de configurations alternées peut être différent, et en particulier supérieur ou égal à trois.

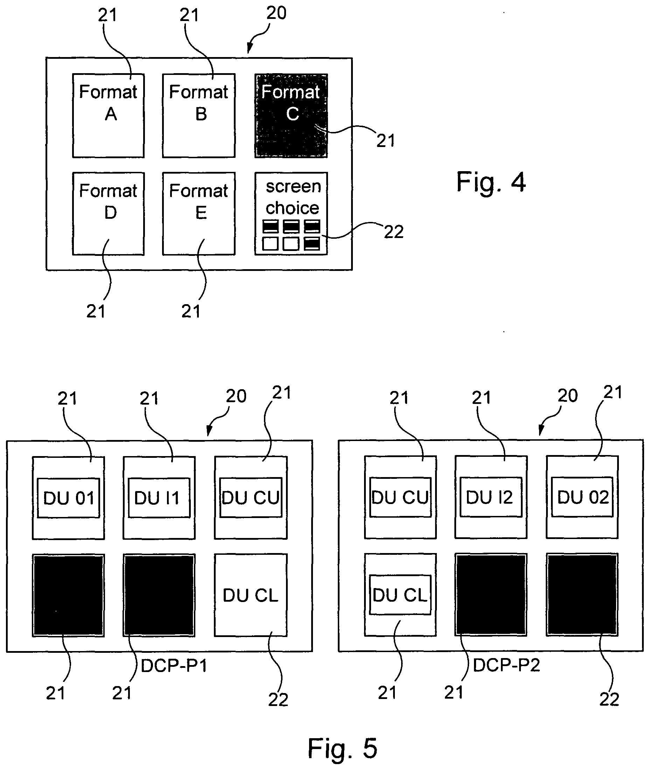

On a illustré aux figures 4 et 5 un second mode de réalisation de l'invention dans lequel le dispositif de contrôle permet de contrôler les moyens d'affichage d'un poste de pilotage indépendamment de l'existence ou non d'un curseur.

Dans ce second mode de réalisation, le dispositif de contrôle 20 peut être configuré pour permettre en outre la sélection d'un écran parmi les moyens d'affichage du poste de pilotage.

Dans ce mode de réalisation, le choix d'un format d'affichage est alors réalisé à partir du dispositif de contrôle 20 en deux étapes.

Tout d'abord, le dispositif de contrôle 20 permet de sélectionner un écran du poste de pilotage, puis de déterminer le format ou la combinaison de formats à afficher sur cet écran.

Ainsi, le dispositif de contrôle 20 comporte, comme illustré à la figure 4, une touche de sélection 22 permettant d'alterner le mode de fonctionnement du dispositif de contrôle 20.

Comme bien illustré à la figure 5, lorsque le mode de sélection d'écrans est mis en oeuvre par le dispositif de contrôle 20, les moyens de configuration automatique de ce dispositif permettent d'associer à chaque touche de commande 21, 22 une fonction de sélection d'un écran. Les moyens de visualisation sont alors mis à jour afin de faciliter l'identification de l'écran attribué à chaque touche de commande 21, 22 du dispositif de contrôle 20.

On a illustré à la figure 5, la configuration des dispositifs de contrôle 20 associés à chaque pilote P1, P2.

Dans le mode de réalisation illustré à la figure 1, dans lequel les moyens d'affichage comportent six écrans, chaque pilote P1, P2 ayant accès à quatre écrans, dont les deux écrans CU, CL, un exemple de configuration des touches de commande 21, 22 du dispositif de contrôle 20 est illustré pour chaque pilote P1, P2.

De préférence, l'attribution de chaque écran à chaque touche de commande 21, 22 du dispositif de contrôle 20 correspond géométriquement à la position physique des écrans dans le poste de pilotage.

Par ailleurs, le nombre de touches de commande 21, 22 du dispositif de contrôle doit être au moins égal au nombre d'écrans du poste de pilotage accessibles pour chaque pilote P1, P2.

Une fois le choix d'un écran effectué, le dispositif de contrôle 20 bascule automatiquement dans un mode de sélection de formats tel qu'illustré à la figure 4.

La sélection du format est ensuite mise en oeuvre comme décrit précédemment en référence au premier mode de réalisation de l'invention.

Ici, le retour au mode de sélection d'un écran est obtenu grâce à la touche de sélection 22 accessible dans le mode de sélection de format illustré à la figure 4.

Bien entendu cette touche de sélection 22 pourrait être omise, le dispositif de contrôle 20 étant adapté à revenir à un mode de sélection d'écrans tel qu'illustré à la figure 5 dès qu'un format a été attribué à l'écran sélectionné.

Si lors de la sélection d'un écran, une erreur de manipulation s'est produite de la part du pilote, il suffit, dans le mode de sélection de formats, de sélectionner de nouveau le format déjà affiché pour revenir dans le mode de sélection d'écrans du dispositif de contrôle 20.

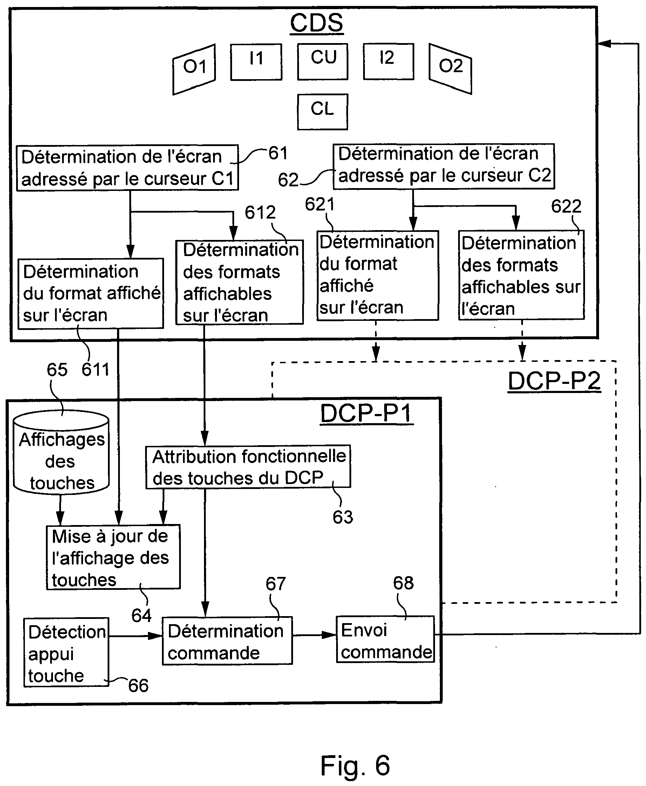

On a illustré à la figure 6 de manière schématique l'exemple d'un dispositif mis en oeuvre dans un poste de pilotage d'un aéronef selon le premier mode de réalisation de l'invention.

Ainsi, chaque dispositif de contrôle DCP (acronyme du terme anglais "*Display Control Panel*") de chaque pilote P1, P2 permet d'interagir avec le système d'affichage du poste de pilotage (ou CDS, acronyme du terme anglais "*Control and Display System*").

Seul l'un des dispositifs de contrôle DCP a été illustré en détails pour l'un des pilotes P1, le second dispositif de contrôle pour le pilote P2 n'ayant pas été détaillé dès lors qu'il possède des fonctions identiques à celles qui vont être décrites ci-dessous pour le premier dispositif de contrôle DCP.

Comme illustré à la figure 6, le système d'affichage CDS comporte un certain nombre d'écrans, comme décrit précédemment en référence à la figure 1.

Il comporte également des moyens de détermination 61, 62 de l'écran adressé par chaque curseur C1, C2 commandé par chaque pilote P1, P2.

Ces moyens de détermination 61, 62 permettent de mettre en oeuvre une étape de sélection d'un écran parmi les écrans des moyens d'affichage.

Par ailleurs, ces moyens de détermination 61, 62 sont associés à des moyens de détermination 611, 612, 621, 622 d'une part du format affiché sur l'écran sélectionné par chaque curseur, et d'autre part des formats affichables sur cet écran.

Ces moyens de détermination 611, 612, 621, 622 permettent de déterminer l'ensemble des formats affichables sur l'écran sélectionné par le curseur.

Cette information sur les formats affichables est adressée à des moyens d'attribution 63 de fonctions à des touches de commande du dispositif de contrôle DCP.

Ces moyens d'attribution 63 permettent d'attribuer à chaque touche de commande du dispositif de contrôle DCP des fonctions adaptées à commander l'affichage des différents formats affichables sur l'écran sélectionné.

Des moyens de mise à jour 64 de l'affichage des touches sont également prévus dans le dispositif de contrôle DCP.

Ces moyens de mise à jour 64 coopèrent avec une base de données 65 mémorisant les différents types d'affichage des touches en fonction du rôle attribué à chacune des touches.

Ces moyens de mise à jour 64 sont ainsi adaptés à mettre à jour les moyens de visualisation associés à chaque touche de commande en vue d'identifier visuellement les formats attribués à ces touches de commande.

Comme décrit précédemment, ces moyens de mise à jour 64 coopèrent d'une part avec les moyens d'attribution 63 pour déterminer et attribuer à chaque touche de commande un des formats affichables, mais également avec les moyens de détermination 611 du format affiché sur l'écran afin de signaler visuellement au pilote P1 le format courant affiché sur l'écran sélectionné.

Des moyens de détection 66 d'un appui sur une des touches de commande permettent ensuite au pilote P1 de sélectionner un format à afficher sur l'écran.

Ces moyens de détection 66 d'un appui sur une touche coopèrent avec des moyens de détermination 67 d'une commande, en fonction du format attribué par les moyens d'attribution 63 à chaque touche de commande.

Des moyens d'envoi 68 d'une commande permettent ensuite d'obtenir l'affichage au niveau du système d'affichage CDS du format sélectionné.

Ces moyens d'envoi 68 peuvent être reliés de manière classique de manière filaire ou non filaire au système d'affichage CDS pour transmettre les commandes.

Ce dispositif de contrôle DCP illustré à la figure 6 permet ainsi de mettre en oeuvre le procédé de configuration automatique des touches de commande lorsque la sélection d'un écran est mise en oeuvre à partir de la position d'un curseur associé aux moyens d'affichage.

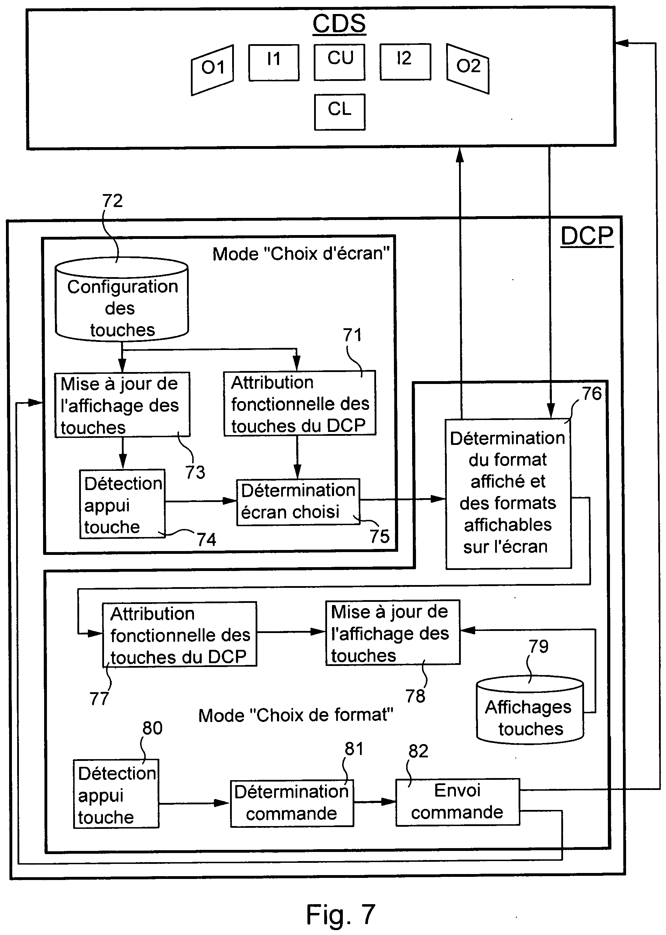

On a illustré également à la figure 7 un dispositif de contrôle DCP dans un second mode de réalisation de l'invention dans lequel la sélection d'un écran du système d'affichage CDS est mise en oeuvre directement à partir d'une touche de commande du dispositif de contrôle DCP des moyens d'affichage.

Dans ce mode de réalisation, le dispositif de contrôle DCP est adapté à fonctionner selon deux modes de fonctionnement, d'une part pour la sélection d'un écran, et d'autre part pour l'attribution d'un format sur cet écran.

Comme bien illustré à la figure 7, le dispositif de contrôle DCP comporte ainsi des moyens d'attribution 71 d'une fonction à chaque touche de commande du dispositif de contrôle DCP permettant à partir d'une base de données 72 de configurer les touches dans un mode de sélection d'écran.

Des moyens de mise à jour 73 permettent également de mettre à jour en correspondance les moyens de visualisation associés à chacune des touches de commande du dispositif de contrôle DCP.

Des moyens de détection 74 de l'appui sur une des touches permettent d'activer des moyens de détermination 75 d'un écran en liaison avec l'attribution à chaque touche de commande d'un écran des moyens d'affichage.

Ces moyens du dispositif de contrôle DCP en mode de sélection d'écrans permettent ainsi de mettre en oeuvre l'étape de sélection d'un écran parmi les écrans des moyens d'affichage du système d'affichage CDS.

L'information sur l'écran sélectionné est ensuite transmise à des moyens de détermination 76 d'un format affiché et des formats affichables sur cet écran sélectionné.

Ces moyens de détermination 76 sont adaptés à demander une information sur les formats affichables et le format courant au système d'affichage CDS.

Cette information est alors transmise par le système d'affichage CDS via des moyens de communication classique, filaires ou non filaires.

Ces moyens de détermination 76 coopèrent avec des moyens d'attribution 77 d'une fonction aux touches de commande du dispositif de contrôle DCP, permettant d'attribuer à chacune de ces touches un format à visualiser sur l'écran sélectionné.

Des moyens de mise à jour 78 sont également adaptés à coopérer avec une base de données 79 mémorisant les différents types d'affichage de touches à associer en fonction du rôle attribué à chaque touche de commande.

Finalement, comme dans le mode de réalisation décrit à la figure 6, des moyens de détection 80, identiques aux moyens de détection 74 du mode de sélection d'écrans, permettent de détecter l'appui sur une touche de commande du dispositif de contrôle DCP.

La détection d'un appui est transférée à des moyens de détermination 81 d'une commande en association avec les moyens d'attribution 77 d'un format à chaque touche de commande.

Des moyens d'envoi 82 permettent ensuite d'adresser au système d'affichage CDS une commande d'affichage du format sélectionné par le pilote.

Simultanément, les moyens d'envoi 82 sont adaptés à commander l'alternance au sein du dispositif de contrôle DCP entre le mode de sélection de formats et le mode de sélection d'écrans, l'ensemble des touches de commande du dispositif de contrôle DCP étant alors mis à jour comme décrit précédemment par les moyens d'attribution 71 et de mise à jour 73 des touches de commande.

Bien entendu, comme indiqué précédemment en référence aux figures 4 et 5, l'alternance entre les deux modes de fonctionnement du dispositif de contrôle pourrait ne pas être automatique.

Une touche de commande dédiée pourrait être manipulée par le pilote pour obtenir l'alternance du mode de sélection d'un format au mode de sélection d'un écran.

Les dispositifs de contrôle décrits précédemment permettent aux pilotes d'accéder très facilement et de manière intuitive aux différents formats affichables sur les écrans d'un poste de pilotage.

Bien entendu, la présente invention n'est pas limitée aux exemples de réalisation décrits précédemment.

## Revendications

1. Procédé de configuration automatique de touches de commande (11, 21, 22) d'un dispositif de contrôle (10, 20) de moyens d'affichage comportant plusieurs écrans, chaque écran étant adapté à afficher un ou plusieurs formats, comprenant une étape de sélection d'un écran parmi lesdits écrans des moyens d'affichage, **caractérisé en ce qu'**il comprend les étapes suivantes :
- détermination d'un ensemble de formats affichables et d'un format courant affiché sur ledit écran sélectionné ;
- mise à jour de moyens de visualisation associés respectivement auxdites touches de commande afin de différencier ledit format courant affiché ;
- attribution auxdites touches de commande (11, 21, 22) du dispositif de contrôle (10, 20) de fonctions adaptées à commander l'affichage respectivement de formats affichables sur ledit écran sélectionné; et
- mise à jour desdits moyens de visualisation en vue d'identifier visuellement les formats attribués respectivement auxdites touches de commande.

2. Procédé de configuration automatique conforme à la revendication 1, **caractérisé en ce que** la sélection d'un écran est mise en oeuvre à partir de la position d'un curseur (C1, C2) associé auxdits moyens d'affichage.

3. Procédé de configuration automatique conforme à la revendication 1, **caractérisé en ce que** la sélection d'un écran est mise en oeuvre à partir d'une touche de commande (21, 22) dudit dispositif de contrôle (20) des moyens d'affichage.

4. Dispositif de contrôle de moyens d'affichage comprenant plusieurs écrans adaptés à afficher plusieurs formats, ledit dispositif de contrôle (10, 20) comprenant plusieurs touches de commande (11, 21, 22), **caractérisé en ce qu'**il comprend des moyens de configuration automatique d'une fonction de commande d'affichage d'un format et de moyens de visualisation associés auxdites touches de commande, adaptés à différencier le format courant affiché sur un écran et à attribuer respectivement auxdites touches de commande (11, 21) des formats affichables sur un écran.

5. Dispositif de contrôle conforme à la revendication 4, **caractérisé en ce que** le nombre de touches de commande est au moins égal à un nombre de formats affichables sur un écran desdits moyens d'affichage.

6. Dispositif de contrôle conforme à la revendication 4, **caractérisé en ce que** le nombre de touches de commande est inférieur à un nombre de formats affichables sur un écran desdits moyens d'affichage, les moyens de configuration automatiques étant adaptés à attribuer à des touches de commande (11) au moins deux formats affichables sur un écran selon des configurations alternées, une desdites touches de commande (12) étant adaptée à alterner la configuration desdites autres touches de commande (11), et le nombre des formats attribués auxdites autres touches de commande (11) étant au moins égal au nombre de formats affichables sur ledit écran des moyens d'affichage.

7. Dispositif de contrôle conforme à l'une des revendications 4 à 6, **caractérisé en ce que** lesdites touches de commande sont des touches virtuelles d'un écran tactile.

8. Dispositif de contrôle conforme à l'une des revendications 4 à 7, **caractérisé en ce qu'**il comprend en outre des moyens de configuration automatique d'une fonction de sélection d'un écran et de moyens de visualisation associés auxdites touches de commande (21, 22), adaptés à associer respectivement auxdites touches de commande des écrans desdits moyens d'affichage.

9. Poste de pilotage d'un aéronef, comprenant des moyens d'affichage (CDS) comportant plusieurs écrans adaptés à afficher un ou plusieurs formats, **caractérisé en ce qu'**il comporte un dispositif de contrôle (DCP) desdits moyens d'affichage conforme à l'une des revendications 4 à 8.

10. Aéronef, **caractérisé en ce qu'**il comprend un poste de pilotage conforme à la revendication 9.

## Patentansprüche

1. Automatisches Konfigurationsverfahren von Steuertasten (11, 21, 22) einer Kontrollvorrichtung (10, 20) von Anzeigeeinrichtungen, die mehrere Bildschirme aufweisen, wobei jeder Bildschirm geeignet ist, eines oder mehrere Formate anzuzeigen, das einen Schritt der Auswahl eines Bildschirms unter den Bildschirmen der Anzeigeeinrichtungen enthält, **dadurch gekennzeichnet, dass** es die folgenden Schritte enthält:
- Bestimmung einer Einheit von anzeigbaren Formaten und eines üblichen Formats, das auf dem ausgewählten Bildschirm angezeigt wird;
- Aktualisierung von Visualisierungseinrichtungen, die den Steuertasten zugeordnet sind, um das angezeigte übliche Format zu differenzieren;
- Zuweisung zu den Steuertasten (11, 21, 22) der Kontrollvorrichtung (10, 20) von Funktionen, die geeignet sind, die Anzeige von anzeigbaren Formaten auf dem ausgewählten Bildschirm zu steuern; und
- Aktualisierung der Visualisierungseinrichtungen, um die den Steuertasten zugewiesenen Formate visuell zu erkennen.

2. Automatisches Konfigurationsverfahren gemäß Anspruch 1, **dadurch gekennzeichnet, dass** die Auswahl eines Bildschirms ausgehend von der Stellung eines Cursors (C1, C2) durchgeführt wird, der den Anzeigeeinrichtungen zugeordnet ist.

3. Automatisches Konfigurationsverfahren gemäß Anspruch 1, **dadurch gekennzeichnet, dass** die Auswahl eines Bildschirms ausgehend von einer Steuertaste (21, 22) der Kontrollvorrichtung (20) der Anzeigeeinrichtungen durchgeführt wird.

4. Kontrollvorrichtung von Anzeigeeinrichtungen, die mehrere Bildschirme enthalten, die geeignet sind, mehrere Formate anzuzeigen, wobei die Kontrollvorrichtung (10, 20) mehrere Steuertasten (11, 21, 22) enthält, **dadurch gekennzeichnet, dass** sie Einrichtungen zur automatischen Konfiguration einer Anzeigesteuerfunktion eines Formats und von den Steuertasten zugeordneten Visualisierungseinrichtungen enthält, die geeignet sind, das auf einem Bildschirm angezeigte übliche Format zu differenzieren und den Steuertasten (11, 21) auf einem Bildschirm anzeigbare Formate zuzuweisen.

5. Kontrollvorrichtung gemäß Anspruch 4, **dadurch gekennzeichnet, dass** die Anzahl von Steuertasten mindestens gleich einer Anzahl von auf einem Bildschirm der Anzeigeeinrichtungen anzeigbaren Formaten ist.

6. Kontrollvorrichtung gemäß Anspruch 4, **dadurch gekennzeichnet, dass** die Anzahl von Steuertasten geringer als eine Anzahl von auf einem Bildschirm der Anzeigeeinrichtungen anzeigbaren Formaten ist, wobei die Einrichtungen zur automatischen Konfiguration geeignet sind, Steuertasten (11) mindestens zwei auf einem Bildschirm gemäß abwechselnden Konfigurationen anzeigbaren Formate zuzuweisen, wobei eine der Steuertasten (12) geeignet ist, die Konfiguration der anderen Steuertasten (11) zu wechseln, und die Anzahl der den anderen Steuertasten (11) zugeordneten Formate mindestens gleich der Anzahl von Formaten ist, die auf dem Bildschirm der Anzeigeeinrichtungen anzeigbar sind.

7. Kontrollvorrichtung gemäß einem der Ansprüche 4 bis 6, **dadurch gekennzeichnet, dass** die Steuertasten virtuelle Tasten eines Berührungsbildschirms sind.

8. Kontrollvorrichtung gemäß einem der Ansprüche 4 bis 7, **dadurch gekennzeichnet, dass** sie außerdem Einrichtungen zur automatischen Konfiguration einer Auswahlfunktion eines Bildschirms und den Steuertasten (21, 22) zugeordnete Visualisierungseinrichtungen enthält, die geeignet sind, den Steuertasten Bildschirme der Anzeigeeinrichtungen zuzuordnen.

9. Cockpit eines Luftfahrzeugs, das Anzeigeeinrichtungen (CDS) enthält, die mehrere Bildschirme aufweisen, die geeignet sind, eines oder mehrere Formate anzuzeigen, **dadurch gekennzeichnet, dass** es eine Kontrollvorrichtung (DCP) der Anzeigeeinrichtungen gemäß einem der Ansprüche 4 bis 8 aufweist.

10. Luftfahrzeug, **dadurch gekennzeichnet, dass** es ein Cockpit gemäß Anspruch 9 enthält.

## Claims

1. A method for automatic configuration of command keys (11, 21, 22) of a device (10, 20) for control of display means including a plurality of screens, each screen being configured to display one or more formats, comprising a step of:
- selecting a screen from among said screens of the display means, wherein it comprises the following steps:
- determining a set of formats that can be displayed on, and a current display format of, said selected screen;
- updating visualization aids associated respectively with said command keys to differentiate said current display format;
- assigning to said command keys (11, 21, 22) of the device (10, 20) for control of functions that command the display respectively of formats that are displayable on said selected screen; and
- updating said visualization aids to visually identify the formats assigned respectively to said command keys.

2. The method for automatic configuration in accordance with claim 1, wherein selecting a screen is implemented based on the position of a cursor (C1, C2) associated with said display means.

3. The method for automatic configuration in accordance with claim 1, wherein selecting a screen is implemented based on a command key (21, 22) of said device (20) for control of the display means.

4. A device for control of display means including a plurality of screens configured to display a plurality of formats, said control device (10, 20) comprising a plurality of command keys (11, 21, 22), wherein it comprises means for automatic configuration of a function for control of the display of a format and visualization aids associated with said command keys configured to differentiate the current display format of a screen, and to assign respectively to said command keys (11, 21) formats that are displayable on a screen.

5. The control device in accordance with claim 4, wherein the number of command keys is at least equal to a number of formats that can be displayed on a screen of said display means.

6. The control device in accordance with claim 4, wherein the number of command keys is less than a number of formats that can be displayed on a screen of said display means, the automatic configuration means being configured to assign to the command keys (11) at least two formats that can be displayed on a screen according to alternate configurations, one of said command keys (12) being configured to alternate the configuration of said command keys (11), and the number of formats assigned to said other command keys (11) being at least equal to the number of formats that can be displayed on said screen of the display means.

7. The control device in accordance with one of claims 4 to 6, wherein said command keys are virtual keys of a touch-sensitive screen.

8. The control device in accordance with one of claims 4 to 7, wherein it further comprises means for automatic configuration of a screen selection function and visualization means associated with said command keys (21, 22), configured to respectively associate screens of said display means with said command keys.

9. A cockpit of an aircraft, comprising display means (CDS) comprising a plurality of screens configured to display one or more formats, wherein it comprises a device (DCP) for control of said display means in accordance with one of claims 4 to 8.

10. An aircraft comprising a cockpit in accordance with claim 9.
